# EUROPEAN PATENT APPLICATION

(11) **EP 2 579 609 A1**
(43) Date of publication of application: **10.04.2013**
(21) Application number: 11306295.4
(22) Date of filing: 06.10.2011
(51) Int. Cl.: H04N 21/472, H04N 21/235, H04N 21/435

(54) **Method and apparatus for providing information for a multimedia content item**

(71) Applicant: Thomson Licensing, 92130 Issy-les-Moulineaux (FR)
(72) Inventor: Lambert, Anne, 35135 Chantepie (FR); Orlac, Izabela, 35160 Breteil (FR); Chevallier, Louis, 35520 La Mézière (FR)
(74) Representative: Schmidt-Uhlig, Thomas

(57) **Abstract**

The invention relates to a method and an apparatus (50) for providing information for a multimedia content item (10) from a catalog of multimedia content items (10) to a user with the capability of displaying intra-content and inter-content information. A timeline (24) of concepts is generated for the multimedia content item (10) using a concept graph (20) and metadata (14) associated to the multimedia content item (10). An enhanced timeline (44) of concepts for the multimedia content item (10) using the timeline (24) of concepts and an enhanced concept graph (26). The enhanced timeline (44) of concepts is then displayed to a user.

## Description

The invention relates to a method and an apparatus for providing information for a multimedia content item, and more specifically to a method and an apparatus for providing information for a multimedia content item with the capability of displaying intra-content and inter-content information.

VOD (Video on demand) services are becoming more and more popular and are competing with content distribution on DVD (Digital Versatile Disk) and BD (Blu-Ray Disk). Today, VOD providers are not yet able to offer the same features that are available on digital disk media. However, studies and surveys have shown that users want more than just watching a movie and wish more DVD-like features, such as the ability to deepen the experience with bonuses around the movie and its story.

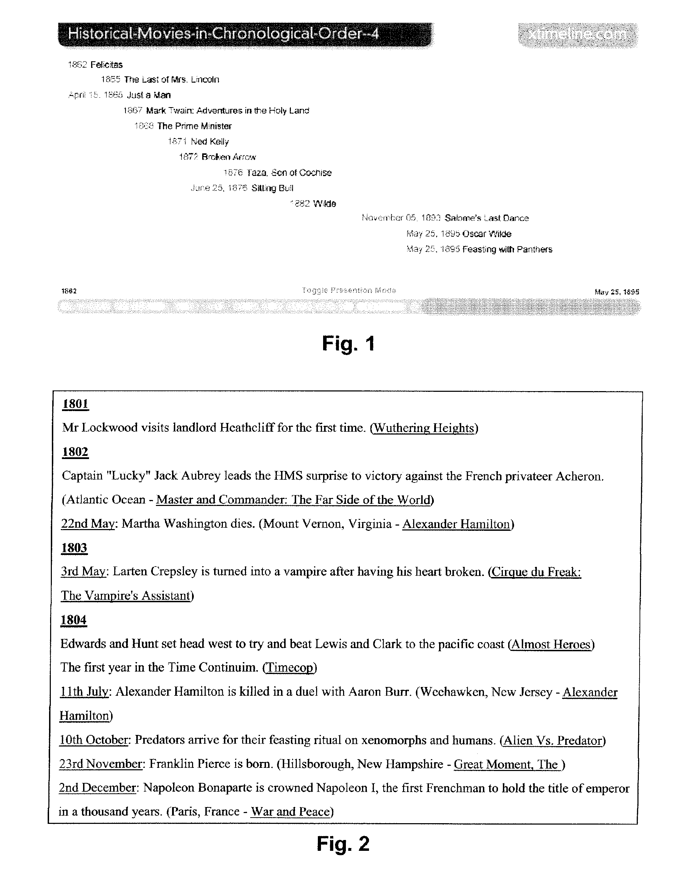

In this regard, xtimeline (www.xtimeline.com) offers the possibility to create and share timelines related to persons, companies, historical periods or special topics, which can be browsed interactively. For example, the timeline 'History of the World in Movies #4' displays movies from 1800 to 1807 in a chronological order, more specifically ordered by the historical period to which they are related. Such a timeline is called an inter-movie timeline. A screenshot of this timeline is shown in Fig. 1.

A slightly different approach to inter-movie timelines is used by 'The Movie Timeline' (www.themovietimeline.com), which provides static timelines of events (fictional or not) in movies arranged in a chronological order. An example of such an inter-movie timeline is illustrated in Fig. 2. As can be seen, the timeline is based on events within the movies, not on the historical period to which the movies are related.

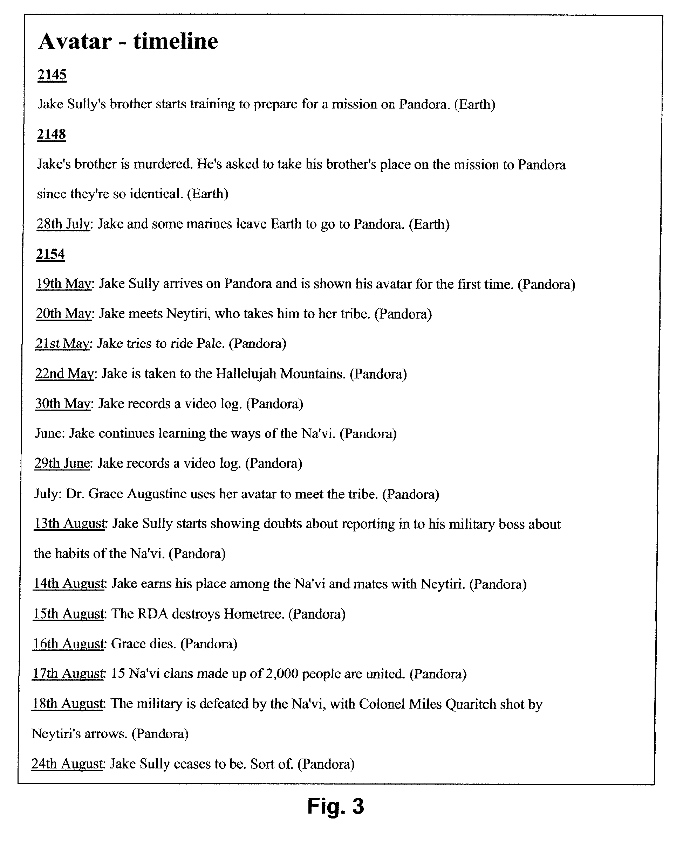

When all displayed events stem from a single movie, the timeline constitutes an intra-movie timeline, i.e. a timeline of events (fictional or not) in a movie arranged in a chronological order. An example of such an intra-movie timeline is depicted in Fig. 3, which lists the main events occurring in the movie 'Avatar'.

Though the above described exemplary timelines give a certain background information to an interested user, it is apparent that these example are only very basic solutions with limited capabilities.

It is thus an object of the present invention to propose a more elaborate solution for navigating within a set of multimedia content items.

According to the invention, a method for providing information for a multimedia content item from a catalog of multimedia content items to a user comprises the steps of:
- generating a timeline of concepts for the multimedia content item using a concept graph and metadata associated to the multimedia content item;
- generating an enhanced timeline of concepts for the multimedia content item using the timeline of concepts and an enhanced concept graph; and
- displaying the enhanced timeline of concepts to a user.

The present invention starts with a timeline of concepts of the multimedia content item, i.e. a timeline of important elements of the story, e.g. places, characters, events, etc. This timeline of concepts for the multimedia content item is generated by:
- matching the metadata associated to the multimedia content item with vertices of the concept graph; and
- associating concepts associated to the vertices of the concept graph to the metadata associated to the multimedia content item.

Preferably, one or more concepts associated to the vertices of the concept graph that match the metadata associated to the multimedia content item are selected based on predetermined selection criteria.

The metadata needed to build the timeline are extracted directly from the multimedia content item or from available textual metadata. To this end the multimedia content items in the catalog are processed beforehand using appropriate techniques, e.g. speech-to-text analysis, analysis of the synopsis or script when available, analysis of available subtitles, etc. The concept graph is obtained by analyzing one or more knowledge bases. Vertices of the concept graph are derived from concepts of the one or more knowledge bases, whereas edges of the concept graph are derived from links or cross references within the concepts of the one or more knowledge bases.

The enhanced concept graph is obtained by associating one or more of the multimedia content items from the catalog of multimedia content items to vertices of the concept graph.

An enhanced timeline of concepts is then generated by:
- searching for vertices in the enhanced concept graph that are connected to concepts in the timeline of concepts; and
- associating concepts associated to the connected vertices of the enhanced concept graph to the timeline of concepts.

Advantageously, the concepts associated to the connected vertices of the enhanced concept graph are ranked and a predetermined number of concepts is selected based on the ranking.

Favorably, multimedia content items that are linked to the connected vertices of the enhanced concept graph are also associated to the timeline of concepts.

Advantageously, an apparatus for providing information for a multimedia content item from a catalog of multimedia content items to a user is adapted to perform a method as described above.

The invention offers a tool for navigating inside a multimedia content item as well as a display of additional detailed information on the story. The multimedia content item may be any multimedia content having a time aspect, e.g. a movie, a TV series, an electronic book, an audio book, a piece of music, etc. The invention is preferably implemented as an illustration of a story of the multimedia content item with an enhanced, interactive timeline representing the duration of the multimedia content item. The user moves along the timeline and is being shown important elements of the story, e.g. places, characters, events, etc. In addition, also connections of these elements to other elements that appear sooner or later in the same multimedia content item are shown. In some cases the elements shown can also direct to other multimedia content items whose story contains those elements.

The invention allows a user to dig deeper in the story of the multimedia content item and its related topics with entry points that he chooses using an interactive interface. It provides a semantic view of the multimedia content item using the story line as an axis with events, characters, places, etc., but also other multimedia content items, that relate to the same events or feature the same places or characters.

The metadata needed to build the timeline are extracted directly from the multimedia content item or from available textual metadata, allowing an unsupervised process to generate the necessary data. They are associated with general knowledge information to create an entertaining presentation of bonuses for a multimedia content item, e.g. links to other subjects, movies, general knowledge articles, etc.

For a better understanding the invention shall now be explained in more detail in the following description with reference to the figures. It is understood that the invention is not limited to this exemplary embodiment and that specified features can also expediently be combined and/or modified without departing from the scope of the present invention as defined in the appended claims. In the figures:
- Fig. 1: shows a first example of an inter-movie timeline,
- Fig. 2: depicts a second example of an inter-movie timeline,
- Fig. 3: illustrates an example of an intra-movie timeline;
- Fig. 4: depicts a timeline according to the invention for a movie,
- Fig. 5: illustrates a procedure for generating an aligned script for a movie,
- Fig. 6: shows a procedure for generating a timeline of concepts for a movie,
- Fig. 7: schematically depicts the generation of a concept graph,
- Fig. 8: illustrates a procedure for further populating a timeline of concepts with additional elements, and
- Fig. 9: schematically depicts an apparatus adapted to perform a method according to the invention.

Fig. 1 and Fig. 2 depict a first and a second example of an inter-movie timeline, respectively. While in Fig. 1 the timeline displays movies in a chronological order according to the historical period to which they are related, the timeline in Fig. 2 displays events in movies arranged in a chronological order.

Fig. 3 shows an intra-movie timeline, which is a special form of the timeline of Fig. 2, where all events displayed in the timeline stem from a single movie.
In the following the invention is explained with reference to movies, e.g. movies taken from a catalog of a VOD provider. Of course, the invention is likewise applicable to other types of multimedia content items.

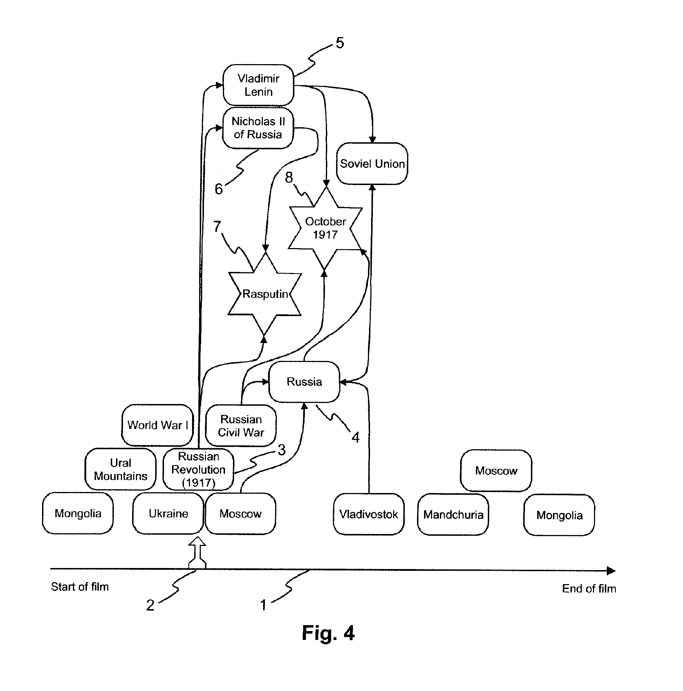

A timeline according to the invention is shown in Fig. 4 for the movie 'Doctor Zhivago'. When the user moves a slider 2 on the movie story timeline 1, he discovers all the elements in the movie that are considered to be of interest. In the example of Fig. 4, the main character returns to Moscow after the Russian Revolution. Using the key elements 'Russian Revolution' 3 and 'Russia' 4, the system is able to link to the biographies of 'Vladimir Lenin' 5 and 'Czar Nicholas II of Russia' 6 as well as to two other films that depict the same period, namely 'Rasputin' 7, a biopic on Rasputin, and 'October 1917' 8, a documentary on the Russian Revolution. The user is thus able to deepen his knowledge of the historical events depicted as well as discover other movies on the same topic. In Fig. 4, all elements of the timeline are displayed in the same manner. Of course, the actual display of the elements depends on the implementation. Typically, only a small number of elements around the current position of the slider 2 will be displayed. Also, elements located near the slider 2 may be highlighted, whereas elements located farther away from the slider may be faded out.

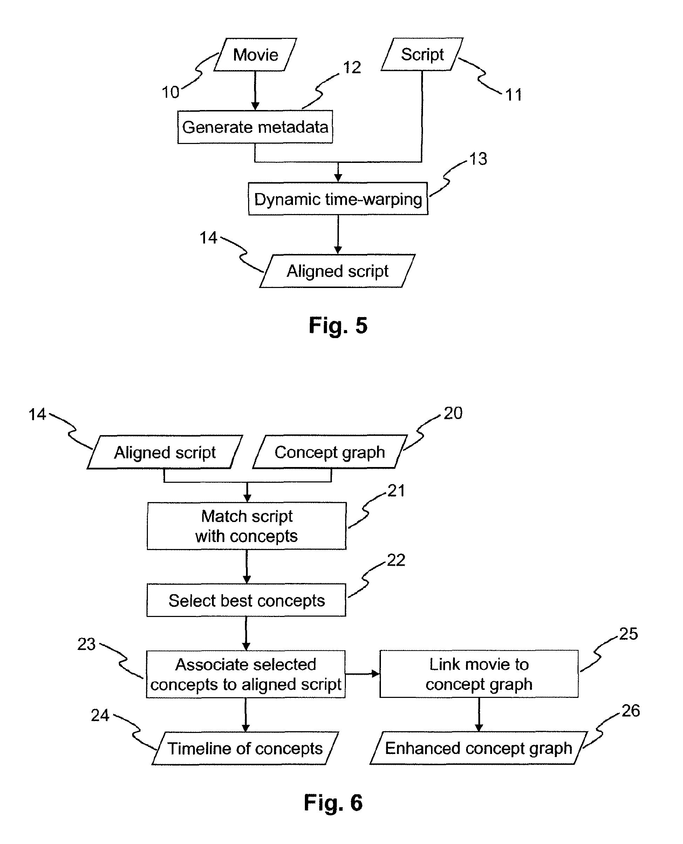

In order to generate a timeline as depicted in Fig. 4, a first procedure generates an aligned script 14 for the movie. This procedure is schematically illustrated in Fig. 5. The procedure uses a movie 10 and, if available, a script or synopsis 11 of the movie to generate the aligned script 14. The script 10 not only contains the dialogs but also descriptions and locations of the different scenes. However, the script is written by a human for humans, it does usually not contain the time information that is needed to build the aligned script. Therefore, other metadata need to be retrieved and/or generated 12 metadata for the movie. One source of these metadata are the subtitles, i.e. the dialogs from the movie with the associated time. In case the subtitles are not available, a speech-to-text analysis is an alternative source for dialogs and time information. A dynamic time-warping algorithm 13 then generates the aligned script 14 from the available metadata. The procedure is favorably performed for all movies in the catalog.

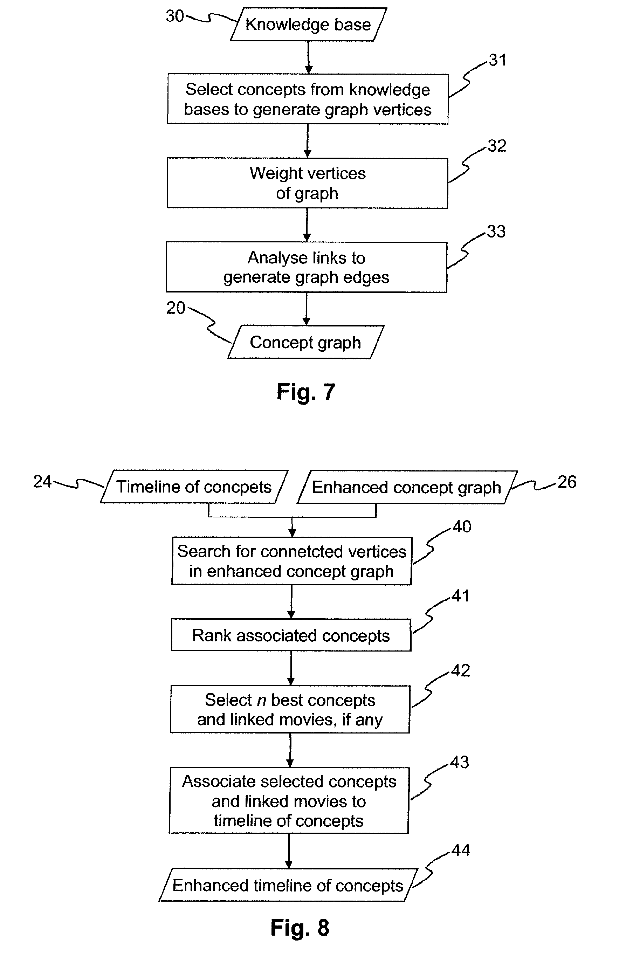

A second procedure, which is schematically illustrated in Fig. 6, generates a timeline of concepts representing the movie from the aligned script 14. The procedure starts from the aligned script 14 and a concept graph 15, whose generation will be explained later with reference to Fig. 7. In a first step the aligned script 14 is matched 21 with concepts of the concept graph 20. Possible concepts are, for example, persons, places, events, organizations, etc. By way of example, an element 'Exterior Moscow - Night' of the aligned script 14 matches with the concept 'Moscow' of the concept graph 20. Advantageously, each concept has an associated numerical value, which is used to describe the interest or relevance of the corresponding concept within the graph. For example, events may be more relevant than persons, towns may be more relevant that countries, etc. Once the matching 21 is done, those concepts are selected 22, which best represent the movie. This selection is done, for example, using the frequency of occurrence of a concept in the movie, the interest of a concept, etc. Subsequently the selected concepts are associated 23 to the aligned script 14, which results in a timeline 24 of concepts representing the story of the movie. In addition, the movie 10 is linked 25 to the concept graph 20 in order to obtain an enhanced concept graph 26. Again, the procedure is favorably repeated for all movies in the catalog, so that the enhanced concept graph 26 includes edges (links) to all movies in the catalog.

The generation of a concept graph 20 is schematically illustrated in Fig. 7. In a first step concepts are retrieved 31 from a knowledge base 30. The concepts are selected based on their content, e.g. place, character, event, etc., and placed as vertices in a directed graph. Knowledge bases that are readily available for this purpose are, for example, the online encyclopedia Wikipedia (http://en.wikipedia.org) or the Internet Movie Database IMDb (http://www.imdb.com). The graph vertices are then weighted 32 in order to indicate the interest or relevance of the corresponding vertex within the graph. The internal cross references or hyperlinks found in the knowledge base 30 are used to build 33 edges between the vertices. In this way it is ensured that two vertices are connected if the associated concepts are semantically linked. For example, 'Paris' will be linked to 'France', 'Vladimir Lenin' will be linked to 'Russian Revolution (1917)', etc.

A third procedure, which is schematically illustrated in Fig. 8, is now used to further populate each timeline 24 of concepts with additional elements, i.e. links to related concepts or movies, based on the enhanced concept graph 26. In a first step 40 a broad search for the concepts of the timeline 24 of concepts is performed within the enhanced concept graph 26 in order to find connected vertices. In the next step the concepts associated to the retrieved connected vertices are ranked 41. The ranking is preferably done in accordance to the weights associated to the concepts. Also, it is advantageously taken into account if other movies are linked to the concepts. In this way it is possible to give more weight to a concept to which a movie is linked. In order to limit the amount of information that will later be provided to the user, only a specified number n of concepts and linked movies is subsequently selected 42. Which concepts to select is preferably decided based on the ranks assigned in the previous step 41. The selected concepts and linked movies are then associated 43 to the timeline 24 of concepts in order to obtain an enhanced timeline 44 of concepts. This enhanced timeline 44 of concepts eventually forms the basis for the movie timeline of Fig. 4.

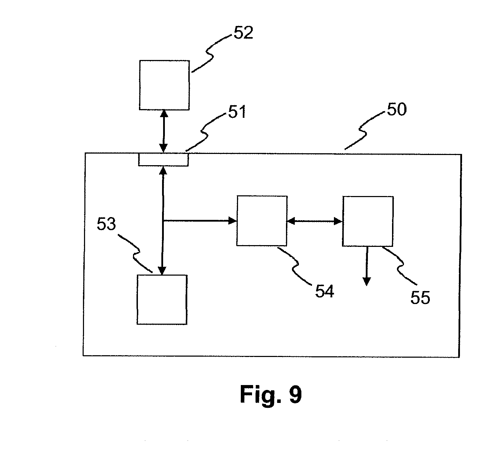

An apparatus 50 adapted to perform the above described method is schematically depicted in Fig. 9. The apparatus 50 has an interface 51 for retrieving concepts from one or more external knowledge bases 52. Alternatively or in addition, concepts may likewise be retrieved from an internal memory 53. A processor 54 is provided for analyzing the concepts and for generating the necessary vertices and edges of the concept graph 20. Based on a plurality of multimedia content items 10 the processor 54 further generates an enhanced concept graph 26 from the concept graph 20. Advantageously, the memory 53 is used for storing the completed enhanced concept graph 26. The apparatus 50 further comprises an information system 55 for providing information about a multimedia content item 10 to a user. In order to generate the necessary information the processor 54 retrieves the enhanced concept graph 26 as well as a timeline 24 of concepts and generates an enhanced timeline 44 of concepts. This enhanced timeline 44 of concepts is then used for displaying the requested information to the user. Of course, the processor 54 and the information system 55 may likewise be combined into a single processing block.

## Claims

1. A method for providing information for a multimedia content item (10) from a catalog of multimedia content items (10) to a user, the method **comprising** the steps of:
- generating a timeline (24) of concepts for the multimedia content item (10) using a concept graph (20) and metadata (14) associated to the multimedia content item (10);
- generating an enhanced timeline (44) of concepts for the multimedia content item (10) using the timeline (24) of concepts and an enhanced concept graph (26); and
- displaying the enhanced timeline (44) of concepts to a user.

2. The method according to claim 1, **wherein** the timeline (24) of concepts for the multimedia content item (10) is generated by:
- matching (21) the metadata (14) associated to the multimedia content item (10) with vertices of the concept graph (20); and
- associating (23) concepts associated to the vertices of the concept graph (20) to the metadata (14) associated to the multimedia content item (10).

3. The method according to claim 2, **further** comprising the step of selecting (22) one or more concepts associated to the vertices of the concept graph (20) that match the metadata (14) associated to the multimedia content item (10) based on predetermined selection criteria.

4. The method according to one of claims 1 to 3, **wherein** the enhanced timeline (44) of concepts for the multimedia content item (10) is generated by:
- searching (40) for vertices in the enhanced concept graph (26) that are connected to concepts in the timeline (24) of concepts; and
- associating (43) concepts associated to the connected vertices of the enhanced concept graph (26) to the timeline (24) of concepts.

5. The method according to claim 4, **further** comprising the steps of:
- ranking (41) the concepts associated to the connected vertices of the enhanced concept graph (26); and
- selecting a predetermined number of concepts based on the ranking (41).

6. The method according to claim 4 or 5, **further** comprising the step of associating multimedia content items that are linked to the connected vertices of the enhanced concept graph (26) to the timeline (24) of concepts.

7. The method according to one of claims 1 to 6, **wherein** the metadata (14) associated to the multimedia content item (10) include a script or synopsis (11) of the multimedia content item (10) and metadata derived by an analysis (12) of the multimedia content item (10).

8. The method according to claim 7, **wherein** the analysis (12) of the multimedia content item (10) includes a speech-to-text analysis or an analysis of subtitles.

9. The method according to one of claims 1 to 8, **wherein** the concept graph (20) is obtained by analyzing one or more knowledge bases.

10. The method according to claim 9, **wherein** vertices of the concept graph (20) are derived (31) from concepts of the one or more knowledge bases.

11. The method according to claim 9 or 10, **wherein** edges of the concept graph (20) are derived (33) from links or cross references within the concepts of the one or more knowledge bases.

12. The method according to one of claims 1 to 11, **wherein** the enhanced concept graph (26) is obtained by associating (25) one or more of the multimedia content items (10) from the catalog of multimedia content items (10) to vertices of the concept graph (20).

13. The method according to one of claims 1 to 12, wherein the multimedia content item (10) is one of a movie, a TV series, an electronic book, an audio book, and a piece of music.

14. An apparatus (50) for providing information for a multimedia content item (10) from a catalog of multimedia content items (10) to a user, **characterized in that** the apparatus (50) is adapted to perform a method according to one of claims 1 to 13 for generating an enhanced timeline (44) of concepts for the multimedia content item (10).
